# FASCICULE DE BREVET EUROPEEN

(11) **EP 3 729 570 B1**
(45) Date de publication et mention de la délivrance du brevet: **14.06.2023**
(21) Numéro de dépôt: 18825702.6
(22) Date de dépôt: 20.12.2018
(51) Int. Cl.: H01R 43/28, H02G 1/12

(54) **DISPOSITIF POUR DENUDER UN CABLE**
KABELABMANTELVORRICHTUNG
CABLE STRIPPING DEVICE

(30) Priorité: 20.12.2017 FR 1762675
(43) Date de publication de la demande: 28.10.2020
(73) Titulaire: Silec Cable, 77876 Montereau Fault Yonne (FR)
(72) Inventeur: TOP, Abdou-Karim, 77250 Ecuelles (FR); LAGNEAU, Didier, 77130 La Grande Paroisse (FR); CASUC, Christophe, 77130 Montereau-fault-yonne (FR)
(74) Mandataire: Decorchemont, Audrey Véronique Christèle
(86) Numéro de dépôt international: PCT/EP2018/086386
(87) Numéro de publication internationale: WO 2019/122235

(56) Documents cités:
- WO-A1-2011/136001
- GB-A- 1 187 927
- JP-A- S5 631 310
- JP-A- 2001 268 740
- US-A- 3 222 957

## Description

L'invention concerne un dispositif pour dénuder un câble.

### ARRIERE PLAN TECHNOLOGIQUE DE L'INVENTION

Dans le domaine des câbles de transport d'énergie électrique haute tension ou des câbles de transport d'énergie moyenne tension, il est courant de livrer sur chantier les câbles bruts c'est-à-dire dépourvus d'accessoires de câbles.

C'est donc sur chantier que les opérateurs préparent les deux bouts de chaque câble soit pour réaliser une jonction entre deux câbles soit pour ajouter comme accessoire une extrémité de câble telle qu'une extrémité de câble à jupes en silicone.

A cet effet, les opérateurs sont obligés de dénuder à l'aide d'un outil les bouts des câbles afin de retirer les couches entourant le conducteur électrique central (se présentant parfois sous la forme d'un toron) pour le préparer à la jonction avec un autre câble et/ou un accessoire d'extrémité de câble. Ceci s'avère donc relativement fastidieux d'autant plus que l'outil avec lequel les opérateurs dénudent les câbles est muni de couteaux peu adaptés.

Un tel outil manuel comprend ainsi une platine pourvue d'un orifice à travers lequel on agence le bout d'un câble, des couteaux s'étendant à travers l'orifice de sorte que par rotation de la platine, les couteaux viennent déchirer progressivement les couches entourant le conducteur électrique central. L'opérateur peut ainsi copeau par copeau dénuder le câble.

Cette solution demeure relativement fastidieuse. Il faut ainsi environ deux heures à un opérateur pour dénuder deux bouts de câbles afin de préparer leur jonction. La manipulation de l'outil peut en outre s'avérer également dangereuse pour les opérateurs.

Le document JP S56 31310 propose un dispositif pour dénuder un câble comprenant une multitude de crochets articulés sur une base.

Les documents JP 2001 268740, US 3 222 957 et WO 2011/136001 et GB1187927 proposent d'autres dispositifs de l'art antérieur.

### OBJET DE L'INVENTION

Un but de l'invention est de proposer un dispositif pour dénuder un câble plus facilement.

### BREVE DESCRIPTION DE L'INVENTION

En vue de la réalisation de ce but, on propose un dispositif pour dénuder un câble, le dispositif comprenant au moins :
- une chambre d'extraction dont une extrémité distale est fermée par une flasque comprenant une rainure,
- un poussoir mobile monté dans la chambre d'extraction entre une position de repos dans laquelle le poussoir s'étend au niveau d'une extrémité proximale de la chambre et une position déployée, le poussoir étant destiné à appuyer sur le câble pour le presser contre la rainure de la flasque.

En service, un opérateur entaille le câble puis agence le dispositif de sorte que la rainure de la flasque reçoive le câble au niveau de cette entaille : l'opérateur n'a alors plus qu'à déplacer le poussoir entre sa position de repos et sa position déployée pour presser le câble contre la rainure ce qui provoque un détachement de la ou des couches concentriques extérieures du câble que l'on souhaite retirer, la rainure présentant en effet une section plus faible que celle du câble.

L'invention s'avère ainsi simple et rapide d'utilisation mais également sûre pour l'opérateur.

En outre, l'invention permet de retirer d'un bloc tout un tronçon d'une ou plusieurs couches du câble en place de la multitude de copeaux avec les dispositifs de l'art antérieur.

Préférentiellement, bien que non exclusivement, l'invention est adaptée à dénuder un bout d'un câble pour le préparer à une jonction avec un autre câble et/ou pour l'associer à un accessoire de câble comme une extrémité de câble.

L'inventeur a ainsi pu mettre au point un prototype permettant la préparation d'une jonction entre deux bouts de câbles en une quinzaine de minutes seulement.

Selon l'invention, la flasque est montée de manière amovible dans la chambre d'extraction.

Optionnellement, le dispositif comporte un bouchon agencé sur une extrémité libre du poussoir de sorte qu'en service le poussoir appuie sur le câble par l'intermédiaire du bouchon.

Optionnellement, le bouchon est monté de manière amovible sur le poussoir.

Optionnellement, le bouchon est aimanté sur le poussoir.

Optionnellement, le poussoir est monté coulissant dans la chambre entre sa position de repos et sa position déployée.

Optionnellement, le dispositif comprend des moyens d'actionnement automatiques du poussoir.

Optionnellement, les moyens d'actionnement automatiques sont des moyens d'actionnement hydrauliques.

Optionnellement, la chambre d'extraction est ouverte et dépourvue de couvercle.

Optionnellement, le dispositif comporte au moins une poignée pour faciliter la manipulation de la chambre d'extraction.

D'autres caractéristiques et avantages de l'invention ressortiront à la lecture de la description qui suit d'un mode de réalisation particulier non limitatif de l'invention.

### BREVE DESCRIPTION DES DESSINS

L'invention sera mieux comprise à la lumière de la description qui suit en référence aux figures annexées ci-jointes parmi lesquelles :
- la figure 1 est une vue en perspective du dispositif selon un mode de réalisation particulier de l'invention,
- les figures 2a, 2b et 2c illustrent différentes étapes successives pour dénuder un câble à l'aide d'un dispositif tel qu'illustré à la figure 1.

### DESCRIPTION DETAILLEE DE L'INVENTION

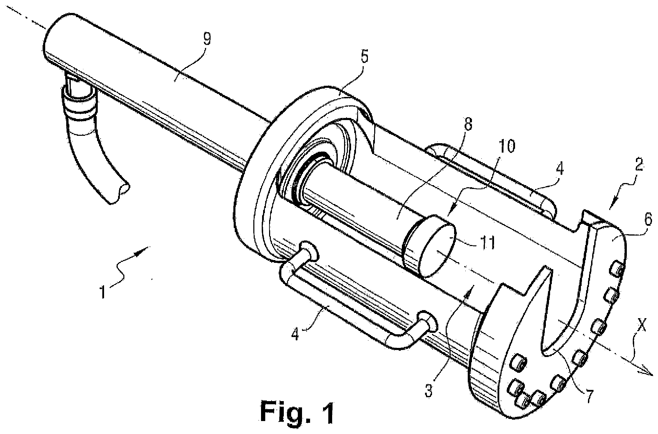

En référence à la figure 1, le dispositif selon un mode de réalisation particulier de l'invention, généralement désigné en 1, comporte une chambre d'extraction 2 s'étendant longitudinalement selon un premier axe X.

La chambre d'extraction 2 comprend un corps central 3.

Le corps central 3 est généralement conformé en cylindre droit, de droite directrice confondue avec le premier axe X. Selon un mode de réalisation particulier, le corps central 3 est par ailleurs ouvert sur toute sa longueur (prise selon le premier axe X) mais sur un secteur angulaire seulement de sa surface cylindrique. Typiquement, ledit secteur angulaire est compris entre 90 et 200 degrés. De préférence, le secteur angulaire est sensiblement de 180 degrés de sorte que la surface cylindrique du corps central 3 soit conformée en un demi-cylindre.

La chambre d'extraction 2 ne comporte pas ici de couvercle pour fermer de façon amovible ledit corps central 3.

De préférence, le dispositif 1 comprend au moins une poignée pour faciliter la manipulation de la chambre d'extraction 2 par un opérateur. De façon particulière, le dispositif 1 comprend deux poignées 4 pour la manipulation de la chambre d'extraction 2. Typiquement, les deux poignées 4 sont agencées sur le corps central de manière radialement opposée l'une à l'autre.

La chambre d'extraction 2 comporte une flasque proximale 5 qui est agencée à une extrémité proximale du corps central 3 de sorte à former l'extrémité proximale de la chambre d'extraction 2. Ladite flasque proximale 5 présente ici une section sensiblement circulaire (selon une section de normale le premier axe X). Ladite flasque proximale 5 est en outre agencée de manière à être concentrique au corps central 3 et ici au premier axe X.

Par ailleurs, la chambre d'extraction 2 comporte une flasque distale 6 qui est agencée à une extrémité distale du corps central 3 de sorte à former l'extrémité distale de la chambre d'extraction 2. Ladite flasque distale 6 présente ici une section sensiblement circulaire (selon une section de normale le premier axe X). Ladite flasque distale 6 est en outre agencée de manière à être concentrique au corps central 3 et ici au premier axe X.

Une rainure 7 est par ailleurs ménagée dans la flasque distale 6. Ladite rainure 7 est par exemple conformée en U.

La rainure 7 s'étend radialement depuis un bord de la flasque distale 6 en direction du centre de ladite flasque distale 6. Par exemple, la rainure 7 s'étend jusqu'au centre de ladite flasque distale 6. La rainure 7 s'étend ici de sorte à déboucher sur le bord de ladite flasque distale 6 au niveau de la portion ouverte du corps central 3.

La rainure 7 présente une largeur sensiblement égale au diamètre de la portion de câble que l'on souhaite conserver.

Selon l'invention, la flasque distale 6 est agencée de manière amovible sur le corps central 3 afin qu'il soit aisé de remplacer ladite flasque distale 6 par une autre dans laquelle une rainure de dimensions différentes est ménagée.

On assure ainsi avec un même dispositif de pouvoir dénuder des câbles de dimensions différentes et/ou de dénuder un même câble à des épaisseurs différentes selon la flasque distale utilisée.

La flasque distale 6 est par exemple vissée sur le corps principal 3.

Ceci permet un changement de flasque distale aisé pouvant être effectué directement sur chantier.

Par ailleurs, le dispositif 1 comprend un poussoir conformé ici sous la forme d'une tige 8 rectiligne. Ladite tige 8 est de préférence montée coulissante dans la chambre d'extraction 2 entre une position de repos et une position déployée. L'axe de coulissement de la tige 8 est par exemple confondu avec le premier axe X.

La tige 8 est agencée de sorte qu'en position de repos la tige 8 s'étende au niveau de la flasque proximale 5 à l'intérieur de la chambre d'extraction 2 et de sorte qu'en position déployée la tige 8 s'étende au niveau de la flasque distale 6 à l'intérieur de la chambre d'extraction 2. La tige 8 peut toutefois s'arrêter dans toute position intermédiaire entre la position de repos et la position déployée.

La tige 8 fait par exemple partie d'un vérin dont le corps 9 est solidaire de la chambre d'extraction 2 en étant par exemple agencé à l'extérieur de la chambre d'extraction 2 au niveau de la flasque proximale 5, la tige 8 traversant alors la flasque proximale 5 pour pouvoir coulisser dans la chambre d'extraction 2. Le corps du vérin 9 s'étend ainsi dans le prolongement de la chambre d'extraction 2 selon le premier axe X.

De façon préférée, le dispositif 1 comporte des moyens d'actionnement du vérin 9, et donc de la tige 8, qui sont automatiques (non visibles ici). Les moyens d'actionnement automatiques sont de préférence des moyens d'actionnement hydrauliques.

De préférence, le dispositif 1 comporte un bouchon 10 qui est agencé sur une extrémité de la tige 8 afin de masquer ladite extrémité. Le bouchon 10 comporte une face d'appui 11 plane par l'intermédiaire de laquelle la tige 8 appuie sur le câble à dénuder.

De la sorte, les pressions exercées par la tige 8 sur le centre du câble sont bien mieux réparties. On évite en outre que la tige 8 ne vienne appuyer directement sur le centre du câble que l'on doit au final utiliser.

Le bouchon 10 est par exemple globalement conformé en un cylindre droit.

La surface de la face d'appui 11 du bouchon 10 est de valeur inférieure ou égale à celle de la section de la portion de câble à conserver sur laquelle ladite face d'appui 11 appuie en service.

De préférence, la surface de la face d'appui 11 du bouchon 10 est égale à celle de la section de la portion de câble à conserver sur laquelle ladite face d'appui 11 appuie en service.

La tige 8 est par ailleurs dimensionnée pour ne pas gêner l'arrachement des couches externes de la portion de câble à conserver.

Le bouchon 10 est agencé de manière amovible sur la tige 8 afin qu'il soit aisé de remplacer ledit bouchon 10 par un autre de dimensions différentes.

On assure ainsi avec un même dispositif de pouvoir utiliser un bouchon 10 avec des câbles de dimensions différentes et/ou avec un même câble dénudé à des épaisseurs différentes.

Le bouchon 10 est par exemple aimanté ou visé sur la tige 8.

Ceci permet un changement de bouchon 10 aisé pouvant être effectué directement sur chantier. En outre, ceci permet au bouchon 10 de bien s'appuyer contre un conducteur électrique central si un tel conducteur est présent dans le câble.

On va à présent décrire une mise en œuvre d'un tel dispositif.

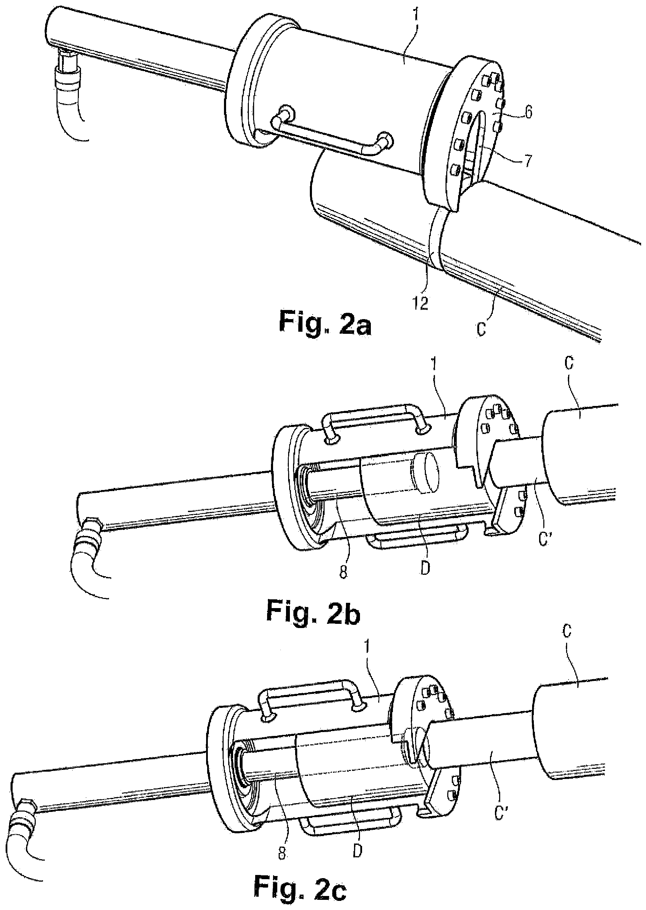

Comme visible à la figure 2a, l'opérateur ménage tout d'abord une entaille 12 dans le bout du câble C jusqu'à la profondeur voulue (selon la profondeur à laquelle il souhaite dénuder le câble C) et à la longueur voulue (selon la longueur du bout du câble C qu'il souhaite dénuder).

Cette étape est bien connue de l'homme du métier et ne sera pas détaillée ici.

L'opérateur agence ensuite le dispositif 1 de sorte que la rainure 7 de la flasque distale 6 soit agencée dans l'entaille 12, le bout du câble C étant alors reçu dans la chambre d'extraction 2. La rainure 7 est ainsi une rainure de réception d'une entaille 12 du câble C soit une rainure de réception du câble dénudé C'.

En référence à la figure 2b, l'opérateur active les moyens d'actionnement qui provoquent le déplacement de la tige 8 de sa position de repos en direction de sa position déployée.

La tige 8 avance et finit par toucher, par l'intermédiaire du bouchon 10, la portion de câble à conserver C'. La tige 8 continue à avancer poussant le bout de câble C à l'extérieur de la chambre d'extraction 2 ce qui provoque un arrachement des couches externes autour de la portion de câble à conserver C' lors du passage du bout du câble au niveau de la rainure.

Comme visible à la figure 2c, la tige 8 continue à avancer jusqu'à ce que tout le bout du câble C soit sorti de la chambre d'extraction (la tige 8 étant alors dans sa position déployée ou dans une position intermédiaire selon la longueur sur laquelle on a souhaité dénuder le bout du câble C).

L'opérateur peut alors désactiver les moyens d'actionnement.

Dans la chambre d'extraction il récupère ainsi un tronçon D entier creux de couche(s) enlevée(s).

Le dispositif 1 permet donc de récupérer les déchets liés à la préparation du câble C sous une forme compacte et même sous un seul élément.

On dénude ainsi de manière simple et efficace le câble C.

De façon avantageuse, l'opérateur n'a pas besoin de poser le dispositif 1 sur un support et peut tout à fait porter le dispositif 1 grâce aux poignées 4 pendant l'utilisation du dispositif 1.

On peut dès lors utiliser le dispositif 1 décrit pour par exemple, bien que non exclusivement, dénuder un câble de transport d'énergie électrique haute tension (soit une tension supérieure à 50 kilovolts) ou de transport d'énergie moyenne tension (soit une tension inférieure à 50 kilovolts et supérieure à 1 kilovolt). Optionnellement, le dispositif 1 décrit est utilisé pour dénuder un câble de transport d'énergie électrique de sorte à ne conserver que le conducteur électrique central (parfois sous forme d'un toron).

Le dispositif 1 est cependant adapté à dénuder un câble soit entièrement, de sorte à atteindre une couche centrale dudit câble, soit partiellement, de sorte à atteindre une des couches intermédiaires du câble entourant la couche centrale.

Bien entendu l'invention n'est pas limitée au mode de réalisation décrit et on peut y apporter des variantes sans sortir du cadre de l'invention tel que défini par les revendications.

Le corps central pourra être fermé par un couvercle amovible.

Les moyens d'actionnement du poussoir pourront être pneumatiques en place d'être hydrauliques.

Le mouvement du poussoir pourra être provoqué de manière manuelle ou automatique.

Le poussoir pourra être monté mobile vis-à-vis de la chambre d'extraction autrement que ce qui a été indiqué. Par exemple, le poussoir pourra être déplacé selon un mouvement hélicoïdal entre sa position de repos et sa position déployée.

Le poussoir pourra ainsi prendre une autre forme que celle illustrée et comporter par exemple une portion en spirale.

Le poussoir pourra appuyer directement sur le câble sans bouchon intermédiaire.

Le dispositif pourra être équipé d'un outil tranchant, automatisé ou non, pour effectuer lui-même l'entaille dans laquelle insérer la rainure de la flasque distale.

La rainure pourra présenter une autre forme que celle décrite et être par exemple conformée en V ou bien présenter des extrémités s'étendant en direction l'une de l'autre.

Bien qu'ici la rainure présente des contours lisses, ladite rainure pourra présenter des contours coupants par exemple par le biais d'une lame plate et/ou d'une lame dentée afin de faciliter l'arrachement de(s) couche(s) du câble. On pourra également conformer la rainure de sorte qu'une partie de ses contours soit lisse et une autre partie soit coupante.

## Revendications

1. Dispositif pour dénuder un câble, le dispositif comprenant au moins :
- une chambre d'extraction (2) dont une extrémité distale est fermée par une flasque (6) comprenant une rainure (7),
- un poussoir (8) monté mobile dans la chambre d'extraction entre une position de repos dans laquelle le poussoir s'étend au niveau d'une extrémité proximale de la chambre et une position déployée, le poussoir étant destiné à appuyer sur le câble pour le presser contre la rainure de la flasque,
dans lequel la flasque (6) est montée de manière amovible dans la chambre d'extraction.

2. Dispositif selon l'une des revendications précédentes, comportant un bouchon (10) agencé sur une extrémité libre du poussoir (8) de sorte qu'en service le poussoir appuie sur le câble par l'intermédiaire du bouchon.

3. Dispositif selon la revendication 2, dans lequel le bouchon (10) est monté de manière amovible sur le poussoir (8).

4. Dispositif selon la revendication 3, dans lequel le bouchon (10) est aimanté sur le poussoir (8).

5. Dispositif selon l'une des revendications précédentes, dans lequel le poussoir (8) est monté coulissant dans la chambre d'extraction (2) entre sa position de repos et sa position déployée.

6. Dispositif selon l'une des revendications précédentes, comprenant des moyens d'actionnement automatiques du poussoir (8).

7. Dispositif selon la revendication 6, dans lequel les moyens d'actionnement automatiques sont des moyens d'actionnement hydrauliques.

8. Dispositif selon l'une des revendications précédentes, dans lequel la chambre d'extraction (2) est ouverte et dépourvue de couvercle.

9. Dispositif selon l'une des revendications précédentes, comportant au moins une poignée (4) pour faciliter la manipulation de la chambre d'extraction.

## Patentansprüche

1. Vorrichtung zum Abisolieren eines Kabels, wobei die Vorrichtung mindestens Folgendes umfasst:
- eine Ausziehkammer (2), deren distales Ende durch einen Flansch (6) mit einer Nut (7) verschlossen ist,
- einen Drücker (8), der in der Ausziehkammer zwischen einer Ruheposition, in der sich der Drücker an einem proximalen Ende der Kammer erstreckt, und einer ausgefahrenen Position beweglich montiert ist, wobei der Drücker dazu bestimmt ist, auf das Kabel zu drücken, um es gegen die Nut des Flansches zu pressen, wobei der Flansch (6) abnehmbar in der Ausziehkammer angebracht ist.

2. Vorrichtung nach einem der vorhergehenden Ansprüche, mit einem Stopfen (10), der an einem freien Ende des Drückers (8) so angeordnet ist, dass der Drücker im Betrieb über den Stopfen auf das Kabel drückt.

3. Vorrichtung nach Anspruch 2, wobei der Stopfen (10) abnehmbar auf dem Drücker (8) angebracht ist.

4. Vorrichtung nach Anspruch 3, wobei der Stopfen (10) auf dem Drücker (8) magnetisch ist.

5. Vorrichtung nach einem der vorhergehenden Ansprüche, wobei der Drücker (8) in der Ausziehkammer (2) zwischen seiner Ruheposition und seiner ausgefahrenen Position verschiebbar montiert ist.

6. Vorrichtung nach einem der vorhergehenden Ansprüche, wobei die Vorrichtung Mittel zur automatischen Betätigung des Drückers (8) umfasst.

7. Vorrichtung nach Anspruch 6, wobei das automatische Betätigungsmittel ein hydraulisches Betätigungsmittel ist.

8. Vorrichtung nach einem der vorhergehenden Ansprüche, bei der die Ausziehkammer (2) offen ist und keinen Deckel hat.

9. Vorrichtung nach einem der vorhergehenden Ansprüche, mit mindestens einem Griff (4) zur Erleichterung der Handhabung der Ausziehkammer.

## Claims

1. Device for stripping a cable, the device comprising at least:
- an extraction chamber (2), a distal end of which is closed by a flange (6) comprising a slot (7),
- a pusher (8) mounted so as to move in the extraction chamber between a rest position in which the pusher extends level with a proximal end of the chamber and a deployed position, the pusher being intended to bear against the cable in order to press it against the slot in the flange, wherein the flange (6) is detachably mounted in the extraction chamber.

2. Device as claimed in any one of the preceding claims, comprising a cap (10) arranged on a free end of the pusher (8) so that, in operation, the pusher bears against the cable via the cap.

3. Device as claimed in claim 2, wherein the cap (10) is detachably mounted on the pusher (8).

4. Device as claimed in claim 3, wherein the cap (10) is magnetized on the pusher (8).

5. Device as claimed in any one of the preceding claims, wherein the pusher (8) is mounted so as to slide in the extraction chamber (2) between its rest position and its deployed position.

6. Device as claimed in any one of the preceding claims, comprising means for automatically actuating the pusher (8).

7. Device as claimed in claim 6, wherein the automatic actuating means are hydraulic actuating means.

8. Device as claimed in any one of the preceding claims, wherein the extraction chamber (2) is open and has no cover.

9. Device as claimed in any one of the preceding claims, comprising at least one handle (4) to facilitate handling of the extraction chamber.
